# EUROPEAN PATENT APPLICATION

(11) **EP 3 716 590 A1**
(43) Date of publication of application: **30.09.2020**
(21) Application number: 18881924.7
(22) Date of filing: 30.10.2018
(51) Int. Cl.: H04M 1/04

(54) **PORTABLE DEVICE HOLDER**

(30) Priority: 24.11.2017 KR 20170158777; 12.03.2018 KR 20180028490
(71) Applicant: Mypop Inc., Seoul 02772 (KR)
(72) Inventor: LEE, Jang Chul, Namyangju-si Gyeonggi-do 12104 (KR)
(74) Representative: Klunker IP Patentanwälte PartG mbB
(86) International application number: PCT/KR2018/012978
(87) International publication number: WO 2019/103338

(57) **Abstract**

The present invention relates to a holder for portable devices attachable to one surface of a portable device. The holder of the present invention enables a user to stably grip a portable device or to mount a portable device on the floor or the like. According to the present invention, the holder for portable devices includes a fixing portion detachably attached to a portable device and a support provided on one surface of the fixing portion and having a hollow formed therein and having a plurality of folding portions formed therearound so as to be stretchable in a longitudinal direction. In addition, each of the folding portions is formed in a polygonal shape having at least three included angles so as to be rotatable in at least three directions.

## Description

### [Cross-Reference to Related Applications]

This application claims priority to Korean Patent Application No. 10-2017-0158777, filed on November 24, 2017, and Korean Patent Application No. 10-2018-0028490, filed on March 12, 2018, in the Korean Intellectual Property Office, the disclosures of each of which are incorporated herein by reference.

### [Technical Field]

The present invention relates to a holder for portable devices attachable to one surface of a portable device, and more particularly, to a holder for portable devices having a stretchable portion for enabling a user to stably grip a portable device or to mount a portable device on the floor or the like.

### [Background Art]

Recently, the telecommunication industry and related fields are evolving remarkably. In addition, with the miniaturization of electronic products, the popularization of personal portable devices such as smartphones, personal digital assistants (PDAs), and mp3 players is rapidly advancing.

However, when users carry a portable device by hand, there is a high risk of loss. On the other hand, when users carry a portable device in their pocket or bag, it may be inconvenient to carry the portable device. Recently, expensive smartphones are being launched. Scratches or damage that may occur when carrying or using such expensive smartphones may add to economic burden on users. In addition, due to concerns about such scratches or damage, users may feel uncomfortable when carrying or using the smartphones.

Accordingly, in recent years, holders for portable devices that allow a user to use a portable device while carrying the portable device have been developed and used.

However, in the case of conventional holders for portable devices, the size of the holders is large, which makes it difficult to carry the holders. In addition, the conventional holders are used only for gripping and are therefore less useful.

### [Disclosure]

### [Technical Problem]

The present invention is directed to providing a holder for portable devices including a support connected to one surface of a portable device and configured so as to be stretchable through folding portions. The holder of the present invention enables a user to stably grip a portable device or to mount a portable device on the floor or the like. In addition, the outer circumferential surfaces of the folding portions are formed in a hexagonal shape so that the mounting angle is prevented from being changed by the weight of a portable device when the portable device is mounted.

### [Technical Solution]

One aspect of the present invention provides a holder for portable devices including a fixing portion detachably attached to a portable device; and a hollow support provided on one surface of the fixing portion and having a plurality of folding portions formed therearound so as to be stretchable in the longitudinal direction, wherein each of the folding portions is formed in a polygonal shape having at least three included angles so as to be rotatable in at least three directions.

According to the present invention, the folding portions may be formed to have a hexagonal outer circumferential surface.

According to the present invention, the folding portions may be arranged so that the edges of odd-numbered folding portions and the edges of even-numbered folding portions cross each other.

According to the present invention, the folding portions may be formed so that the size of odd-numbered folding portions is larger than the size of even-numbered folding portions.

According to the present invention, the odd-numbered folding portions and the even-numbered folding portions may be formed so that the sizes thereof increase in a direction in which the support disposed on the fixing portion projects from the fixing portion.

According to the present invention, the support may be formed of a flexible material.

According to the present invention, the fixing portion may be formed in a plate shape and provided with an attachment surface to which the portable device is attached and a connection surface to which the support is connected.

According to the present invention, the support may include a connection member coupled to the fixing portion, and a folding member extending in one direction from the connection member and having the folding portions formed on the outer circumferential surface thereof.

According to the present invention, the connection member may be formed with an opening having an open face, and a protrusion member protruding from a part of the connection surface may be formed in the fixing portion, wherein the protrusion member may be inserted into the opening so that the protrusion member and the opening are coupled to each other.

According to the present invention, the protrusion member and the opening may be formed in a shape corresponding to the shape of the folding portions.

According to the present invention, at least one coupling protrusion may be formed on the outer circumferential surface of the protrusion member, and a coupling groove into which the coupling protrusion is inserted may be formed in the connection member.

According to the present invention, the holder may further include a seating member protruding from an end of the support and having an outer circumferential surface formed in a shape identical to the outer circumferential surface of the folding portions.

According to the present invention, a seating space communicating with the hollow of the support may be formed inside the seating member.

Another aspect of the present invention provides a holder for portable devices including a fixing portion detachably attached to a portable device; and a hollow support provided on one surface of the fixing portion and having a plurality of folding portions formed therearound so as to be stretchable in a longitudinal direction, wherein each of the folding portions has a hexagonal outer circumferential surface so as to be rotatable in at least six directions.

According to the present invention, the folding portions may be arranged so that the edges of odd-numbered folding portions and the edges of even-numbered folding portions cross each other, and may be formed so that the size of odd-numbered folding portions is larger than the size of even-numbered folding portions.

According to the present invention, the odd-numbered folding portions and the even-numbered folding portions may be formed so that the sizes thereof increase in a direction in which the support disposed on the fixing portion projects from the fixing portion.

According to the present invention, the fixing portion may be formed in a plate shape and provided with an attachment surface to which the portable device is attached and a connection surface to which the support is connected.

According to the present invention, the support may include a connection member coupled to the fixing portion, and a folding member extending in one direction from the connection member and having the folding portions formed on the outer circumferential surface thereof.

According to the present invention, the connection member may be formed with an opening having an open face, and a protrusion member protruding from a part of the connection surface may be formed in the fixing portion, wherein the protrusion member may be inserted into the opening so that the protrusion member and the opening are coupled to each other.

According to the present invention, the holder may further include a seating member protruding from an end of the support and having an outer circumferential surface formed in a shape identical to the outer circumferential surface of the folding portions.

According to the present invention, a seating space communicating with the hollow of the support may be formed inside the seating member.

### [Advantageous Effects]

According to the present invention, the holder for portable devices includes a support connected to one surface of a portable device and configured so as to be stretchable through folding portions. With this configuration, when a user grips the support after extending the support in a state wherein a fixing portion is fixed to a portable device, the user can use the portable device while stably gripping the portable device. Accordingly, when the holder of the present invention is used, it is possible to prevent a portable device from being lost while stably carrying the portable device. In addition, since the holder does not easily slip out of the user's hand, it is possible to prevent an accident wherein a portable device falls on the floor and is broken.

In addition to stable gripping of a portable device, the holder can be used to mount a portable device on the floor. That is, a user can mount a portable device on the floor after extending the support in a state wherein the fixing portion is fixed to the portable device. As a practical example, a user can view moving pictures or news while a portable device is mounted on the floor. Thus, the holder of the present invention can increase user convenience when using a portable device.

In addition, in the holder of the present invention, the outer circumferential surfaces of the folding portions and the seating member are formed in a polygonal shape such as a hexagon or the like. As compared with the case wherein the folding portions and the seating member are formed in a circular shape, the area where the holder and the bottom surface contact each other is increased. Therefore, it is possible to prevent the holder from tilting due to the weight of a portable device.

In addition, in the holder of the present invention, the outer circumferential surfaces of the folding portions and the seating member are formed in a polygonal shape so as to be rotatable in at least three directions. Therefore, when a portable device is mounted on the floor, compressed portions can be prevented from being easily released.

### [Description of Drawings]

FIG. 1 is a perspective view of a holder for portable devices according to one embodiment of the present invention.
FIG. 2 is a perspective view of the holder for portable devices of FIG. 1 in a state of being bent in one direction.
FIG. 3 is an exploded perspective view of the holder shown FIG. 2.
FIG. 4 is a side view of the holder for portable devices of FIG. 1 in a state of being compressed.
FIG. 5 is a view showing a state wherein the holder for portable devices shown in FIG. 1 is attached to a portable device.
FIG. 6 is an exploded perspective view of a holder for portable devices according to another embodiment of the present invention.
FIG. 7 is a side view of the holder for portable devices of FIG. 6 in a state of being compressed.

### [Modes of the Invention]

Hereinafter, a holder for portable devices according to preferred embodiments of the present invention will be described in detail with reference to the accompanying drawings. Here, when reference numerals are applied to constituents illustrated in each drawing, it should be noted that like reference numerals indicate like elements throughout the specification. In addition, in the following description of the present invention, a detailed description of known functions and configurations incorporated herein will be omitted when it may make the subject matter of the present invention unclear. Embodiments of the invention are provided to more fully describe the present invention to those skilled in the art. Therefore, the shape and size of the elements in the figures may be exaggerated for clarity.

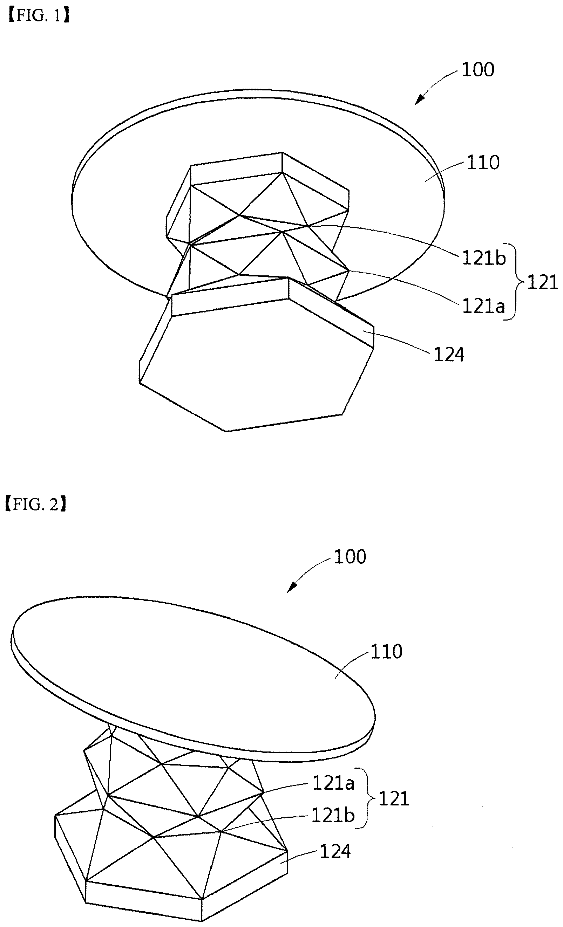

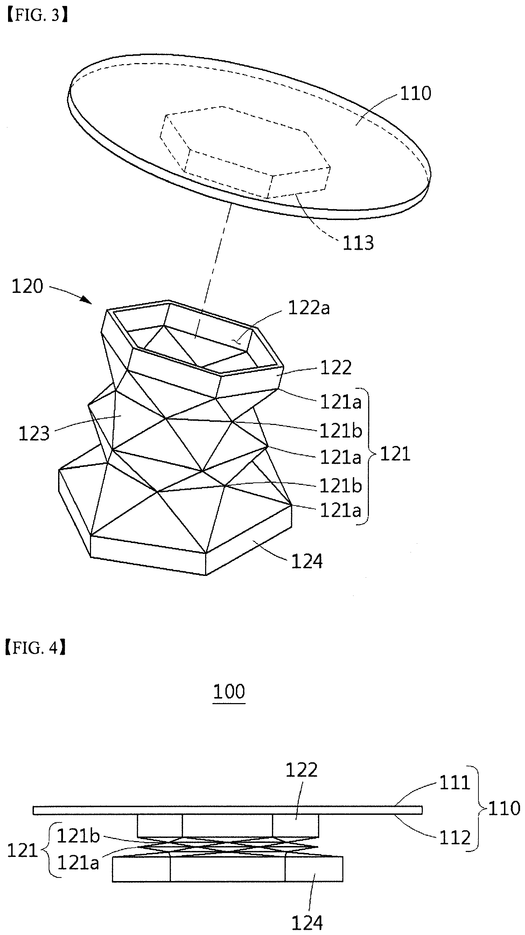

FIG. 1 is a perspective view of a holder for portable devices according to one embodiment of the present invention, FIG. 2 is a perspective view of the holder for portable devices of FIG. 1 in a state of being bent in one direction, FIG. 3 is an exploded perspective view of the holder shown FIG. 2, and FIG. 4 is a side view of the holder for portable devices of FIG. 1 in a state of being compressed.

As shown in FIGS. 1 to 4, a holder for portable devices 100 includes a fixing portion 110 and a support 120. In this embodiment, a portable device 1 may be a smartphone, but is not limited thereto, and may be various mobile devices.

The fixing portion 110 may be detachably attached to the portable device 1. Specifically, the fixing portion 110 may be formed in the shape of a circular plate having an attachment surface 111 for attachment to the portable device 1 and a connection surface 112 for connection with the support 120 to be described below. Accordingly, the fixing portion 110 may be fixed to one surface of the portable device 1 through the attachment surface 111. In this case, the portable device 1 may be attached to the attachment surface 111 by an adsorption method or an adhesive method.

The support 120 may have a hollow shape with an empty interior and may be provided on one surface of the fixing portion 110. In addition, a plurality of folding portions 121a and 121b may be formed around the support 120 so that the support 120 may be expanded and contracted in the longitudinal direction. In addition, each of the folding portions 121a and 121b formed around the support 120 may be formed in a polygonal shape having at least three included angles so as to be rotatable in at least three directions. That is, the outer circumferential surfaces of the folding portions 121a and 121b may be formed in a polygonal shape such as a triangular shape or a square shape, and are preferably formed in a hexagonal shape. The folding portions 121a and 121b may be formed in various shapes. However, for convenience of explanation, a case wherein the outer circumferential surfaces of the folding portions 121a and 121b are hexagonal (that is, a case wherein the folding portions have the shape of a hexagonal column) will be described.

The support 120 may be formed of a flexible material such as a resin to facilitate rotation. Thus, since the support 120 is formed as a hollow columnar shape and the hexagonal folding portions 121a and 121b are formed around the support 120, the support 120 may bend and move in six directions. That is, each of the folding portions 121a and 121b may determine the turning direction of the support 120.

Specifically, the support 120 may include a connection member 122 and a folding member 121.

The connection member 122 may be coupled to the fixing portion 110, and may be formed in the form of a polygonal column in which an opening 122a having an open face is formed. In this case, a protrusion member 113 protruding from a part of the connection surface 112 may be formed on the connection surface 112 of the fixing portion 110 so that the connection member 122 and the fixing portion 110 are coupled to each other. Accordingly, the protrusion member 113 may be inserted into and fixed to the opening 122a so that the fixing portion 110 and the support 120 are coupled to each other. That is, the fixing portion 110 and the support 120 may be coupled to each other through the protrusion member 113 and the connection member 122.

The protrusion member 113 and the connection member 122 may be coupled to each other using an adhesive. The protrusion member 113 may have a polygonal outer circumferential surface like the folding portions 121a and 121b. That is, when the folding portions 121a and 121b are formed in a hexagonal shape, the protrusion member 113 may also be formed as a hexagonal column having a hexagonal outer circumferential surface. In addition, since the protrusion member 113 is inserted into the opening 122a, the opening 122a may be formed in a shape corresponding to the outer circumferential surface of the protrusion member 113.

The folding member 121 may extend in one direction from the connection member 122, and may have the folding portions 121a and 121b formed on the outer circumferential surface thereof. The folding member 121 may be formed so as to extend and contract through the folding portions 121a and 121b. The folding portions 121a and 121b may be formed so that the size of odd-numbered folding portions 121a may be greater than the size of even-numbered folding portions 121b. In addition, the odd-numbered folding portions 121a and the even-numbered folding portions 121b may be formed so that the sizes thereof increase in a direction in which the support 120 disposed on the fixing portion 110 projects from the fixing portion 110. With this configuration, as shown in FIG. 4, when the support 120 is compressed, the odd-numbered folding portions 121a protrude outward and the even-numbered folding portions 121b are recessed inward, whereby the folding member 121 is stretched or compressed.

In addition, the folding portions 121a and 121b may be arranged so that the edges of the odd-numbered folding portions 121a and the edges of the even-numbered folding portions 121b cross each other. That is, when the odd-numbered folding portions 121a are formed in a hexagonal shape, the edges of the odd-numbered folding portions 121a and the centers of the even-numbered folding portions 121b may be disposed side by side so as to face each other. In addition, the odd-numbered folding portions 121a and the even-numbered folding portions 121b may be connected to each other via triangular-shaped joint members 123.

The support 120 may further include a polygonal column-shaped seating member 124 protruding from an end of the folding member 121 and having an outer circumferential surface having the same shape as the cross section of the folding portions 121a and 121b. That is, the seating member 124 may be formed as a hexagonal column protruding downward from the folding portion 121a located at the lowermost portion. When the portable device 1 is mounted on the floor, one surface of the seating member 124 may be brought into contact with the floor so that the portable device 1 does not move. Accordingly, compared with a cylindrical seating member, the contact area between the seating member 124 and the floor increases, and thus the holder is not shaken from side to side, so that the portable device 1 may be stably mounted on the floor.

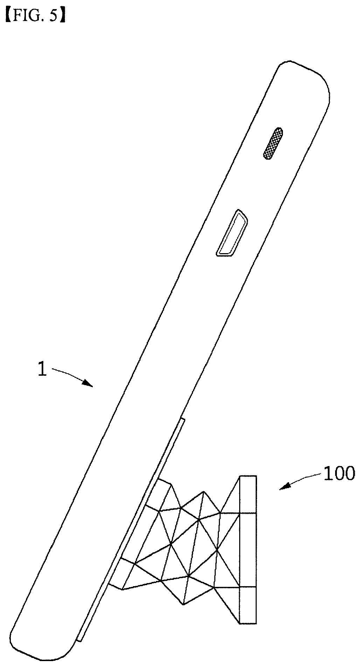

FIG. 5 is a view showing a state wherein the holder for portable devices 100 shown in FIG. 1 is attached to the portable device 1. Examples of use of the holder for portable devices 100 will be described with reference to FIGS. 1 to 5.

First, the attachment surface 111 of the fixing portion 110 is attached to one surface of the portable device 1. In this case, a reusable gel pad or an absorbent is formed on the attachment surface 111. Thus, when the attachment position of the portable device 1 is wrong, the portable device 1 may be detached from the fixing portion 110 and re-attached to the correct attachment position. The gel pad or absorbent is already well known in the art, so that description thereof will be omitted.

In this state, when the seating member 124 is gripped and pulled, the folding portions 121a and 121b of the folding member 121 are stretched, and the support 120 is stretched. Once the support 120 is stretched, a user may grasp the stretched support 120 and use the portable device 1. In this case, the hexagonal folding portions 121a and 121b may be arranged around the folding member 121 so that the edges of the hexagonal folding portions 121a and 121b cross each other. In addition, the size of the even-numbered folding portions 121b disposed between the odd-numbered folding portions 121a may be smaller than the size of the odd-numbered folding portions 121a. Accordingly, the even-numbered folding portions 121b are formed to be recessed inside the outer circumferential surface of the support 120. Therefore, when the concave portion is gripped, sliding may be prevented and gripping force may be increased.

When the holder for portable devices 100 is not used, as shown in FIG. 4, the support 120 may be contracted to reduce the area of the holder exposed to the outside, thereby improving usability.

In addition, as shown in FIG. 5, the holder for portable devices 100 may also be used for the purpose of mounting the portable device 1 on the floor. The upper portion of the portable device 1 is rotated downward in a state wherein the support 120 is stretched, the upper portion of the folding member 121 is contracted and the lower portion thereof is further stretched so that the portable device 1 is supported by the holder for portable devices 100 in a state wherein the portable device 1 is inclined toward the holder. In this case, since the peripheries of the folding portions 121a and 121b and the seating member 124 are formed in a hexagonal shape, in comparison with the case wherein the folding portions and the seating member are formed in a circular shape, the area in contact with the floor increases, so that the holder for portable devices 100 may be prevented from being laterally inclined due to the weight of the portable device 1.

When the holder for portable devices 100 is used to mount the portable device 1 on the floor, a user may view moving pictures or news without holding the portable device 1, thereby increasing user convenience.

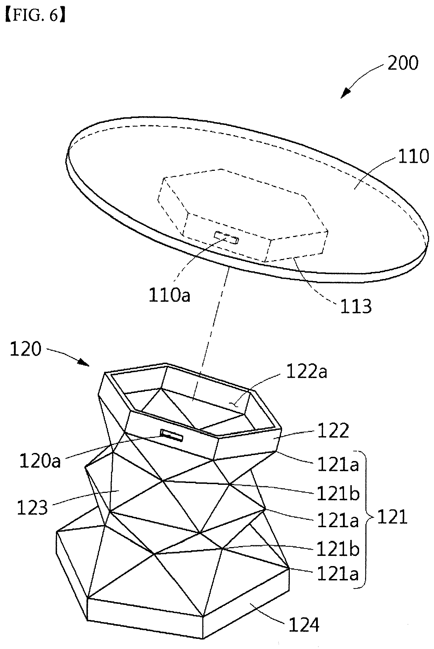

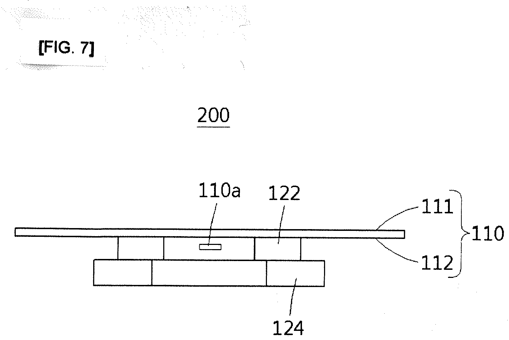

FIG. 6 is an exploded perspective view of a holder for portable devices according to another embodiment of the present invention, and FIG. 7 is a side view of the holder for portable devices of FIG. 6 in a state of being compressed. In the present embodiment, differences from the above-described embodiments will be mainly described.

As shown in FIGS. 6 and 7, a holder for portable devices 200 may be provided with a coupling protrusion 110a and a coupling groove 120a for enhancing a connection between the protrusion member 113 and the connection member 122. Specifically, at least one coupling protrusion 110a may be formed on the outer circumferential surface of the protrusion member 113, and the coupling groove 120a into which the coupling protrusion 110a is inserted may be formed in the connection member 122. Accordingly, when the coupling protrusion 110a is inserted into the coupling groove 120a, and then the protrusion member 113 and the connection member 122 are attached to each other using an adhesive, a connection between the protrusion member 113 and the connection member 122 may be enhanced.

In addition, the seating member 124 protruding from an end of the support 120 and having an outer circumferential surface formed in a shape identical to the outer circumferential surface of the folding portions 121a and 121b may be formed. A seating space communicating with the hollow of the support 120 may be formed inside the seating member 124. Accordingly, as shown in FIG. 7, when the seating member 124 is gripped and pressed in a state wherein the support 120 is stretched, the folding member 121 of the support 120 may be compressed and disposed in the seating space of the seating member 124. Accordingly, when the folding member 121 is compressed, the folding member 121 may not be exposed to the outside and the area exposed to the outside may be reduced, thereby improving appearance and portability.

Although the present invention has been described through limited examples and figures, the present invention is not intended to be limited to the examples. Those skilled in the art will appreciate that various modifications, additions, and substitutions are possible, without departing from the scope and spirit of the invention. Therefore, the scope of the invention is defined not by the detailed description of the invention but by the appended claims.

## Claims

1. A holder for portable devices, comprising:
a fixing portion detachably attached to a portable device; and
a hollow support provided on one surface of the fixing portion and having a plurality of folding portions formed therearound so as to be stretchable in a longitudinal direction,
wherein each of the folding portions is formed in a polygonal shape having at least three included angles so as to be rotatable in at least three directions.

2. The holder according to claim 1, wherein the folding portions are formed to have a hexagonal outer circumferential surface.

3. The holder according to claim 1, wherein the folding portions are arranged so that edges of odd-numbered folding portions and edges of even-numbered folding portions cross each other.

4. The holder according to claim 1, wherein the folding portions are formed so that a size of odd-numbered folding portions is larger than a size of even-numbered folding portions.

5. The holder according to claim 3, wherein the odd-numbered folding portions and the even-numbered folding portions are formed so that sizes thereof increase in a direction in which the support disposed on the fixing portion projects from the fixing portion.

6. The holder according to claim 1, wherein the support is formed of a flexible material.

7. The holder according to claim 1, wherein the fixing portion is formed in a plate shape and is provided with an attachment surface to which the portable device is attached and a connection surface to which the support is connected.

8. The holder according to claim 7, wherein the support comprises a connection member coupled to the fixing portion, and
a folding member extending in one direction from the connection member and having the folding portions formed on an outer circumferential surface thereof.

9. The holder according to claim 8, wherein the connection member is formed with an opening having an open face, and
a protrusion member protruding from a part of the connection surface is formed in the fixing portion,
wherein the protrusion member is inserted into the opening so that the protrusion member and the opening are coupled to each other.

10. The holder according to claim 9, wherein the protrusion member and the opening are formed in a shape corresponding to a shape of the folding portions.

11. The holder according to claim 9, wherein at least one coupling protrusion is formed on an outer circumferential surface of the protrusion member, and a coupling groove into which the coupling protrusion is inserted is formed in the connection member.

12. The holder according to claim 1, further comprising a seating member protruding from an end of the support and having an outer circumferential surface formed in a shape identical to an outer circumferential surface of the folding portions.

13. The holder according to claim 12, wherein a seating space communicating with a hollow of the support is formed inside the seating member.

14. A holder for portable devices, comprising:
a fixing portion detachably attached to a portable device; and
a hollow support provided on one surface of the fixing portion and having a plurality of folding portions formed therearound so as to be stretchable in a longitudinal direction,
wherein each of the folding portions has a hexagonal outer circumferential surface so as to be rotatable in at least six directions.

15. The holder according to claim 14, wherein the folding portions are arranged so that edges of odd-numbered folding portions and edges of even-numbered folding portions cross each other, and
the folding portions are formed so that a size of odd-numbered folding portions is larger than a size of even-numbered folding portions.

16. The holder according to claim 15, wherein the odd-numbered folding portions and the even-numbered folding portions are formed so that sizes thereof increase in a direction in which the support disposed on the fixing portion projects from the fixing portion.

17. The holder according to claim 15, wherein the fixing portion is formed in a plate shape and is provided with an attachment surface to which the portable device is attached and a connection surface to which the support is connected.

18. The holder according to claim 17, wherein the support comprises a connection member coupled to the fixing portion, and
a folding member extending in one direction from the connection member and having the folding portions formed on an outer circumferential surface thereof.

19. The holder according to claim 18, wherein the connection member is formed with an opening having an open face, and
a protrusion member protruding from a part of the connection surface is formed in the fixing portion,
wherein the protrusion member is inserted into the opening so that the protrusion member and the opening are coupled to each other.

20. The holder according to claim 15, further comprising a seating member protruding from an end of the support and having an outer circumferential surface formed in a shape identical to an outer circumferential surface of the folding portions.

21. The holder according to claim 20, wherein a seating space communicating with a hollow of the support is formed inside the seating member.
